# EUROPEAN PATENT APPLICATION

(11) **EP 4 606 466 A1**
(43) Date of publication of application: **27.08.2025**
(21) Application number: 24171318.9
(22) Date of filing: 19.04.2024
(51) Int. Cl.: B01F 27/091, B01F 27/808, B01F 27/84, B01F 27/94, B01F 35/75, B01F 35/92, B01F 35/90

(54) **STIRRING DEVICE**

(30) Priority: 23.02.2024 CN 202410202663
(71) Applicant: Highsun Technology Co., Ltd., Hangzhou Zhejiang (CN)
(72) Inventor: Shaoyong, Zheng, Hangzhou (CN); Tianfeng, Zhu, Hangzhou (CN); Xiaowei, Deng, Hangzhou (CN)
(74) Representative: Monteiro Alves, Inês

(57) **Abstract**

The present application relates to a stirring device 100, where the preliminarily cut slurry semi-finished product is divided into two parts under the centrifugal force and thrust of the stirring blade 114. One part of the slurry is further dispersed through the jet holes 141 of the stirring guard 140 under the action of centrifugal force, and a large amount of slurry semi-finished product is dispersed through the jet holes during the initial stirring. The dispersed slurry flows back into the fluid field and is diverted to the stirring blade by the cone column 130. At this point, the stirring rod 120 initially kneads the dispersed slurry so that the initially kneaded slurry can be dispersed again by the stirring blade. The other part of the slurry contacts the bottom of the slurry container under the action of thrust and undergoes kneading under the entire fluid field and thrust. According to the design structure and design speed of the stirring disc, when slurry with the appropriate viscosity appears, that is, when preliminary slurry deposits occur, the screw pump 300 can export the preliminary slurry deposits and simultaneously empty the space between the bottom of the stirring guard and the bottom of the slurry container, thereby solving the problem of weak kneading capability in traditional high-speed pulp uniformity systems.

## Description

### Technical Field

This application relates to the technical field of battery production device, particularly to a stirring device.

### Background Technology

With the development of the electrical age, the battery industry has seen a positive outlook for development. Currently, one of the most widely used batteries in various branches is the type that applies electrolyte slurry to one side of a hand-torn steel sheet. This type of battery structure has high requirements for the viscosity of the electrolyte slurry.

High-speed slurry homogenization systems in the battery field have always been the core devices for adjusting the viscosity of electrolyte slurries. Although the stirring paddles of existing high-speed slurry homogenization systems have strong dispersing capabilities, there is still a problem of insufficient kneading capability. The core reason for this problem is that the dispersing column throws out the slurry at high speed, and the quantity of slurry drained to the squeezing and kneading area is limited, resulting in insufficient shear rate. Therefore, it is necessary to propose a stirring device to address the weak kneading capability of traditional high-speed slurry homogenization systems.

### About the invention

In view of this, it is necessary to propose a stirring device to address the weak kneading capability of traditional high-speed slurry homogenization systems.

The present application provides a stirring device comprising:
A stirring disc, which includes stirring paddles, conical columns, and stirring guards;
The stirring guard is annular, and the side wall of the stirring guard is provided with multiple jet orifices;
The stirring paddles comprise multiple blades, each blade is fixedly connected to the side wall of the stirring guard, and each blade is uniformly arranged around the center point of the stirring guard;
The bottom of the conical column is connected to the stirring paddles by threads, and the central axis of the conical column coincides with the central axis of the stirring guard. The angle between the generatrix of the conical column and the axis line is within the range of greater than or equal to 15 degrees and less than or equal to 40 degrees;
The stirring disc also includes multiple stirring rods, each blade is fixedly connected to a stirring rod;
A slurry tank, which has a containing cavity, and the stirring disc is placed in the containing cavity of the slurry tank;
A screw pump, which is fixedly connected to the slurry tank, and the containing cavity of the slurry tank is communicated with the screw pump;
A bracket, comprising a body, a connecting shaft, and a drive device. The slurry tank is fixedly connected to the body, and a preset portion of the connecting shaft is accommodated in the inner cavity of the slurry tank. The preset portion of the connecting shaft is fixedly connected to the stirring disc, and the connecting shaft is hinged to the drive device.

A preset distance is provided between the bottom edge of the stirring disc and the bottom surface of the slurry tank, and the preset distance is within the range of greater than or equal to 15 millimeters and less than or equal to 25 millimeters.

The ratio of the diameter of the stirring guard to the diameter of the slurry tank is within the range of greater than or equal to 0.3 and less than or equal to 0.6.

The present application relates to a stirring device, which accommodates slurry semifinished products through a slurry tank. The stirring disc preliminarily cuts the slurry semifinished products through the stirring paddles, and the slurry semifinished products preliminarily cut are divided into two parts under the centrifugal force and thrust of the stirring paddles. One part of the slurry is further dispersed through the jet orifices of the stirring guard under the action of centrifugal force. During the initial stirring, a large amount of slurry semifinished products are dispersed through the jet orifices, and the dispersed slurry flows back into the fluid field and is diverted by the conical column to the stirring paddles. At this time, the stirring rods preliminarily knead and disperse the slurry, so that the preliminarily kneaded slurry can be dispersed again by the stirring paddles. It is worth mentioning that at this time, the dispersed slurry can couple and withstand the thrust. The other part of the slurry contacts the bottom of the slurry tank under the action of thrust and undergoes kneading under the entire fluid force field and thrust. According to the design structure and design speed of the stirring disc, when slurry with suitable viscosity appears, preliminary slurry deposits occur, and the screw pump can export the preliminary slurry deposits, while emptying the space between the bottom of the stirring guard and the bottom of the slurry tank, thereby solving the problem of weak kneading capability of traditional high-speed slurry homogenization systems.

### Description of drawings

Figure 1 illustrates a schematic diagram of the structural design of the stirring device provided in one embodiment of the present application.
Figure 2 presents the finite element analysis results of the stirring disc during the slurry stirring process in the stirring device provided in one embodiment of the present application.
Figure 3 provides an enlarged view of part A of the stirring device provided in one embodiment of the present application.
Figure 4 depicts a schematic diagram of the structure of the stirring disc with parallelogram jet orifices and enhancement plates in the stirring device provided in one embodiment of the present application.
Figure 5 displays a schematic diagram of the structure of the stirring guard in the stirring device provided in one embodiment of the present application.
Figure 6 shows a schematic diagram of the structure of the blade back and blade edge of the stirring disc in the stirring device provided in one embodiment of the present application.
Figure 7 illustrates a schematic diagram of the structure of the screw pump in the stirring device provided in one embodiment of the present application.
Figure 8 demonstrates the operational state of the stirring device filled with slurry material.

### Diagram Labels:

100: Stirring disc; 110: Stirring paddles; 111: Blade back; 112: Blade edge; 113: Enhancement plate; 114: Blade; 120: Stirring rod; 130: Conical column; 140: Stirring guard; 141: Jet orifice; 200: Slurry tank; 210: Wall stirring paddles; 220: Cooling jacket; 300: Screw pump; 310: First thread section; 311: Motor; 312: Screw; 320: Second thread section; 330: Discharge shell; 331: First end; 332: Second end; 400: Bracket; 410: Body; 420: Connecting shaft; 430: Drive device

### Detailed Description

To provide a clearer understanding of the purpose, technical solution, and advantages of the present application, specific embodiments are described below in conjunction with the accompanying drawings. It should be understood that the specific embodiments described here are merely illustrative and not intended to limit the present application.

This application provides a stirring device.

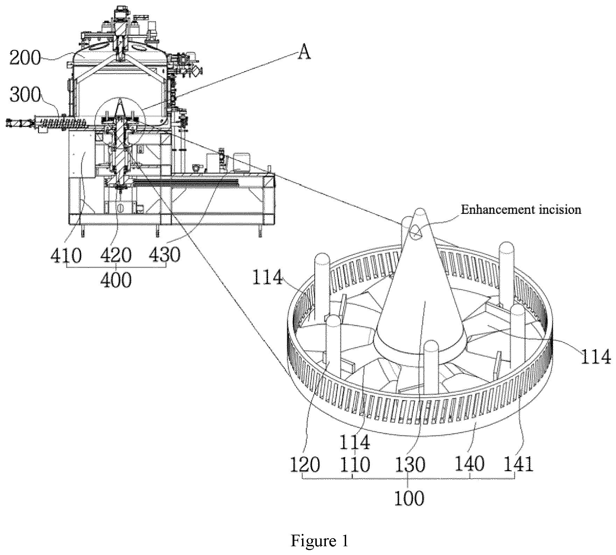

In one embodiment of the present application, as shown in Figure 1, a stirring device comprises a stirring disc (100), a slurry tank (200), a screw pump (300), and a bracket (400).

The stirring disc (100) includes stirring paddles (110), conical columns (130), and stirring guards (140). The stirring guard (140) is annular, with multiple jet orifices (141) along its side wall. Each stirring paddles (110) has multiple blades (114) fixedly connected to the side wall of the stirring guard (140), arranged uniformly around the center point of the stirring guard (140). The bottom of the conical column (130) is threaded to the stirring paddles (110), with its central axis coinciding with that of the stirring guard (140). The stirring disc (100) also includes multiple stirring rods (120), with each blade (114) fixedly connected to one stirring rod (120). The side wall of the stirring guard (140) is also equipped with multiple jet orifices (141).

Specifically, when the stirring blade (110), stirring rod (120), and stirring guard (140) are fixedly connected, it enhances the kneading effect of the dispersed slurry. The stirring rod (120) can achieve preliminary kneading, while the jet orifices (141) of the stirring guard (140) can further knead the slurry. It's worth mentioning that the stirring blade (110) mainly exerts shearing, squeezing, and dispersing effects on the slurry throughout the stirring process.

Regarding the conical column (130), it has two lifting incisions for changing the stirring blade (110). Generally, the conical column (130) is higher than the height of the stirring rod (120).

The slurry container (200) has a containment cavity, where the stirring disc (100) is placed, with a preset spacing between the bottom edge of the stirring disc (100) and the bottom surface of the slurry container (200).

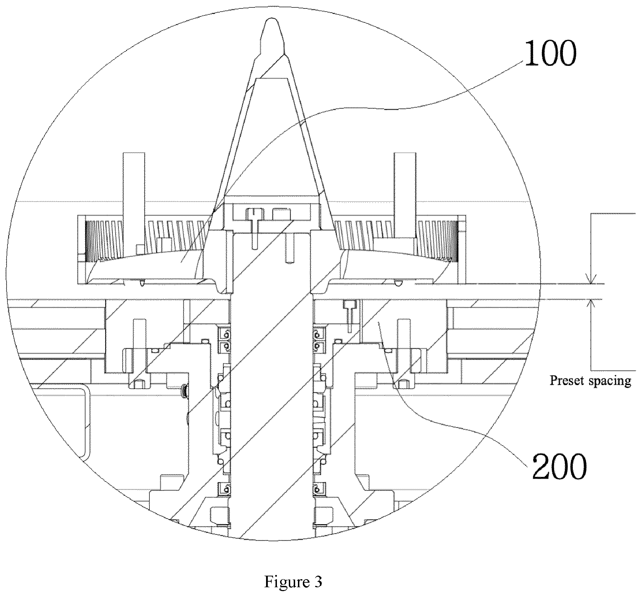

As shown in Figure 3, the preset spacing serves as the kneading zone and is within a numerical range of 0.5 times the height of the stirring guard (140) to 0.7 times its height. The diameter of the stirring guard (140) is within a numerical range of 0.3 times to 0.6 times the diameter of the slurry container (200).

The height of the preset spacing along the vertical line extension direction is 20 millimeters.

The screw pump (300) is fixedly connected to the slurry container (200), and its containment cavity communicates with the slurry container (200).

The bracket (400) comprises a body (410), connecting shaft (420), and drive device (430). The slurry container (200) is fixedly connected to the body (410), and the preset portion of the connecting shaft (420) is accommodated within the cavity of the slurry container (200). The preset portion of the connecting shaft (420) is fixedly connected to the stirring disc (100), and the connecting shaft (420) is articulated with the drive device (430).

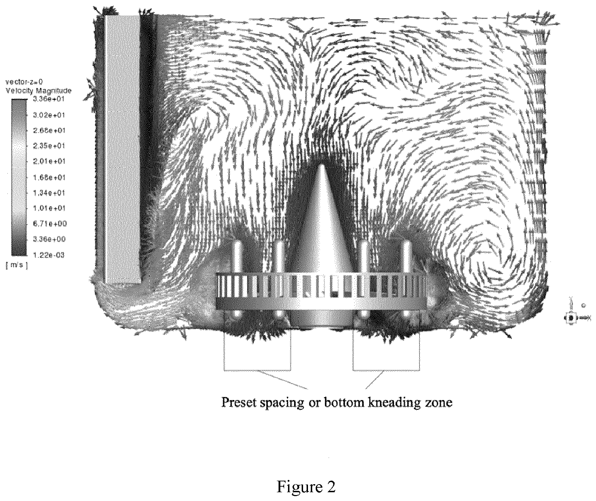

Specifically, as shown in Figure 2, the slurry semi-finished product is accommodated by the slurry tank (200), and the stirring disc (100) initiates the initial cutting of the slurry semi-finished product through multiple stirring paddles (110). Under the centrifugal force and thrust of the stirring paddles (110), the slurry semi-finished product is divided into two parts. One part of the slurry is further dispersed through the jet orifices (141) of the stirring guard (140) under the action of centrifugal force. During the initial stirring phase, a large amount of slurry semi-finished product is dispersed through the jet orifices (141). The dispersed slurry flows back into the fluid field and is diverted by the conical column (130) to the various stirring paddles (110). At this point, the stirring rods (120) initially compact the dispersed slurry, allowing the slurry to be dispersed again by the stirring paddles (110). It's worth noting that the dispersed slurry at this point can couple and withstand the thrust. The other part of the slurry, under the action of thrust, contacts the bottom of the slurry tank (200) and undergoes compaction throughout the entire fluid field and under the thrust. According to the design structure and rotational speed of the stirring disc (100), when slurry with the appropriate viscosity appears, initial slurry sedimentation occurs. The screw pump (300) with screw 312 can then pump out the initial slurry sedimentation, simultaneously clearing the space between the bottom of the stirring guard (140) and the bottom of the slurry tank (200), thereby addressing the weakness of traditional high-speed slurry systems in terms of compaction capability.

This embodiment involves a stirring device where the stirring paddles (110) exhibit strong dispersal capabilities. The combined compaction capability of the stirring paddles (110) and the stirring guard (140) meets the design requirements for the finished slurry. The stirring rods (120) facilitate the rapid discharge of the slurry, ensuring a sufficient quantity of slurry reaches the compaction zone. The jet orifices (141) on the stirring guard (140) regulate the flow of slurry, resulting in a high shear rate.

In this embodiment, an additional ring of stirring guard (140) is added to the upper part of the stirring paddles (110) to reduce the slurry thrown out by the stirring rod (120). The stirring guard (140) can forcibly drain the slurry to the bottom of the container for compaction, thereby enhancing the compaction effect. Furthermore, several jet orifices (141) are uniformly arranged on the stirring guard (140) to avoid the occurrence of dead flow zones, preventing sedimentation and ensuring the overall flow of the slurry. In the fluid simulation diagram shown in Figure 2, it can be observed that most of the fluid flows through the compaction zone at the bottom of the container.

The characteristic of the stirring disc (100) is its strong kneading effect, which promotes the rapid fusion of powder and liquid, thereby shortening the overall stirring time of the slurr y and enhancing production efficiency.

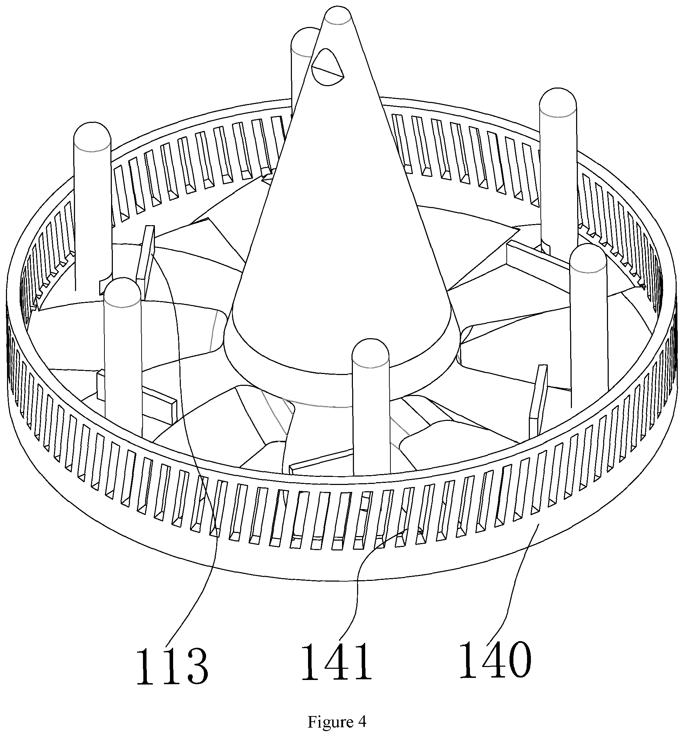

As shown in Figure 4, in one embodiment of the present application, the shape of the jet orifice (141) is a parallelogram. A row of jet orifices (141) is set on the stirring guard (140), positioned near the middle of the side wall of the stirring guard (140). In this row of jet orifices (141), all jet orifices (141) are uniformly arranged around the central axis of the stirring guard (140) with equal angular spacing, and all jet orifices (141) are in the same plane. The angle between the edge along the vertical direction and the edge along the horizontal direction of the jet orifice is a predetermined angle, which is less than 90 degrees.

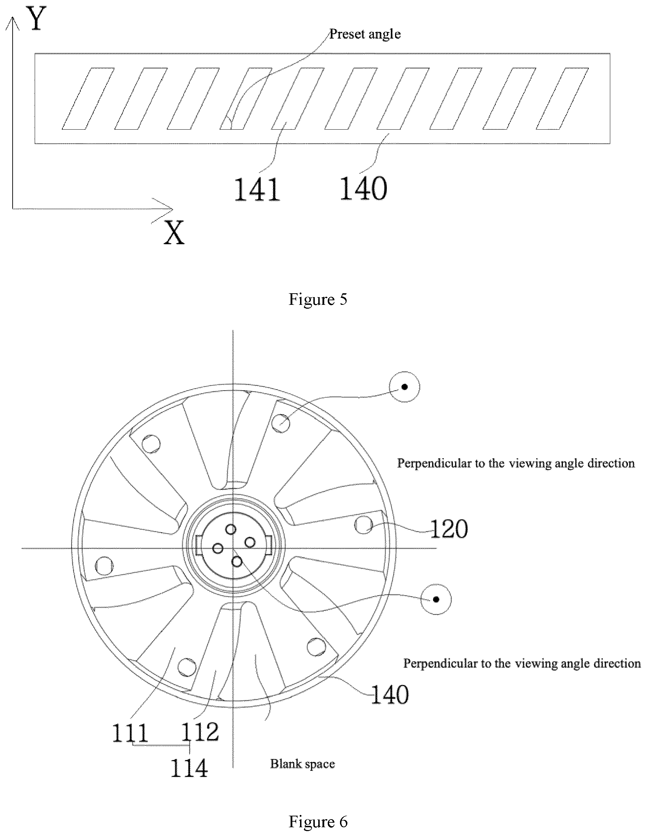

Specifically, as shown in Figure 5, the rotation direction of the stirring paddles (110) can be clockwise or counterclockwise.

Taking the clockwise rotation direction of the stirring paddle (110) as an example from th e same perspective:
As shown in Figure 5, the X-axis direction represents the horizontal direction, while the Y-axis direction represents the vertical direction.

As shown in Table 1: Performance parameters of the stirring disc (100) under different shapes of jet orifices (141), it is worth noting that the difference between the stirring disc (100) with parallelogram jet orifices (141) and the stirring disc (100) with circular jet orifices (141) lies in the structural differences of the stirring guard (140) and the jet orifices (141), while other structures such as the dimensions of the paddle body, chamfer dimensions, cone dimensions, and rod dimensions remain exactly the same.

**Table 1: Performance Parameter Table**

| Parameter Name | Stirring Power | Average Shear Stress | Maximum Shear Stress | Average Shear Rate | Maximum Shear Rate | Top Suction Flow Rate | Material Circulation Rate |
|---|---|---|---|---|---|---|---|
| | kW | Pa | Pa | 1/s | 1/s | L/min | mm/s |
| Circular Jet Hole | 66.2 | 1631.3 | 8004.7 | 28228 | 299014 | 6197 | 862 |
| Quadrilateral Jet Hole | 104.5 | 1708.4 | 8402.2 | 29328 | 304467 | 13386 | 1862 |

This embodiment involves jet orifices (141). The thickness of the stirring guard (140) is 8 millimeters, and the total height of the stirring guard (140) is 70 millimeters. The jet orifices (141) are positioned 7 millimeters from the upper edge of the stirring guard (140) and 35 millimeters from the lower edge of the stirring guard (140). There are 96 jet orifices (141) distributed, each measuring 6 millimeters in length and 38 millimeters in height. The jet orifices (141) accelerate the circulation speed of the slurry due to the different degrees of increased flow area of the stirring guard (140) with quadrilateral jet holes compared to circular jet holes.

As shown in Figures 4 and 6, in one embodiment of the present application, each blade (114) has the same structure. Each blade (114) includes a blade back (111) and a blade edge (112). The blade back (111) is fixedly connected to the blade edge (112). The blade edge (112) is tangentially arranged along the rotation direction of the stirring disc (100), while the blade back (111) is radially arranged away from the rotation direction of the stirring disc (100).

Specifically, the "directional space of the rotation direction of the stirring blade (110) is the gap between two adjacent stirring blades (110)" is explained as follows: The stirring blade (110) divides the spatial plane into a blank space and a fan-shaped area alternating with the stirring blade (110). The tendency of the stirring blade (110) from the initial position towards the blank space indicates the rotation direction of the stirring blade (110). As shown in Figure 1, the stirring blade (110) includes a blade back (111) and a blade edge (112). In the normal working state, along the rotation direction of the stirring blade (110), the blade back (111), the blade edge (112), and the blank space are arranged in turn, forming a cyclic arrangement of structures.

Each top surface of the blade back (111) is provided with an efficiency-enhancing plate (113). Each efficiency-enhancing plate (113) is arranged between the cone column (130) and a stirring rod (120). Each efficiency-enhancing plate (113) has the same structure. The efficiency-enhancing plate (113) is perpendicular to the blade back (111). The height of the efficiency-enhancing plate (113) is less than the height of the stirring guard (140).

Specifically, the efficiency-enhancing plate (113) can enhance the interaction between the slurry fluid fields and strengthen the kneading effect of the entire stirring disc (100).

The central axis of each stirring rod (120) is perpendicular to the horizontal plane. Each stirring rod (120) is fixedly connected to a blade back (111). Each stirring rod (120) is arranged close to the top surface of a blade back (111). Each stirring rod (120) is uniformly arranged around the central axis of the stirring guard (140). The height of each stirring rod (120) is greater than the height of the stirring guard (140).

Specifically, the stirring rod (120) can enhance the interaction between the slurry fluid fields and strengthen the kneading effect of the entire stirring disc (100).

This embodiment involves the stirring blade (110). The stirring blade (110) has strong dispersion capability. Meanwhile, the combined kneading capability of the stirring blade (110) and the stirring guard (140) meets the design requirements of the finished slurry. The stirring rod (120) enables a sufficient amount of slurry to be rapidly thrown out and drained to the extrusion kneading area, and the jet orifices (141) on the stirring guard (140) meet the required quantity of slurry thrown out, resulting in a high shear rate.

It is worth noting that by adding a ring of stirring guard (140) above the stirring blade (110), the slurry thrown out by the stirring rod (120) is reduced, and the stirring guard (140) can forcibly drain the slurry to the bottom of the container to enhance the kneading effect.

As shown in Figure 4, in one embodiment of the present application, the angle between the generatrix of the cone column and the central axis is within an angle range of greater than or equal to 15 degrees and less than or equal to 40 degrees.

Specifically, the cone column (130) is fixedly connected to the stirring blade (110). Depending on different operating conditions, the angle between the generatrix of the cone column (130) and the central axis is within the range of greater than or equal to 15 degrees and less than or equal to 40 degrees.

The slurry enters the stirring blade (110) along the cone column (130) to achieve better dispersion effect.

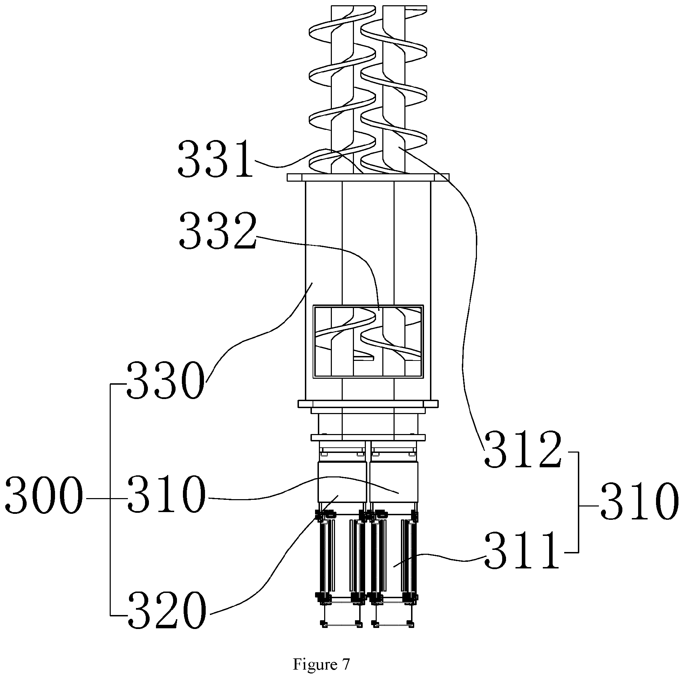

As shown in Figure 7, in one embodiment of the present application, the screw pump (300) includes a first screw section (310), a second screw section (320), and a slurry discharge casing (330). The slurry discharge casing (330) is sleeved on the exterior of the first screw section and the second screw section. The first screw section (310) and the second screw section (320) have the same structure. The first screw section (310) includes a motor (311) and a screw (312). The motor (311) is fixedly connected to the slurry discharge casing (330). The power shaft of the motor (311) is fixedly connected to the screw (312). The central axis of the motor (311) coincides with the central axis of the screw (312). The screw (312) of the first screw section (310) meshes with the screw (312) of the second screw section (320). The first end of the slurry discharge casing (330) is connected to the slurry container (200). The second end of the slurry discharge casing (330) is externally connected to the finished product storage device.

Specifically, to enhance the kneading capability of the slurry, the screw pump (300) of this embodiment adopts the same structure for the first screw section (310) and the second screw section (320). During the process of drawing the finished slurry, the first screw section (310) and the second screw section (320) further knead the slurry and screw the slurry into the slurry discharge casing (330) through threads to achieve slurry discharge.

It is worth noting that the finished product storage device is not shown in Figure 7 and is used to store the kneaded slurry.

This embodiment involves the screw pump (300). The kneading capability achieved by the screw pump (300) meets the design requirements of the finished slurry.

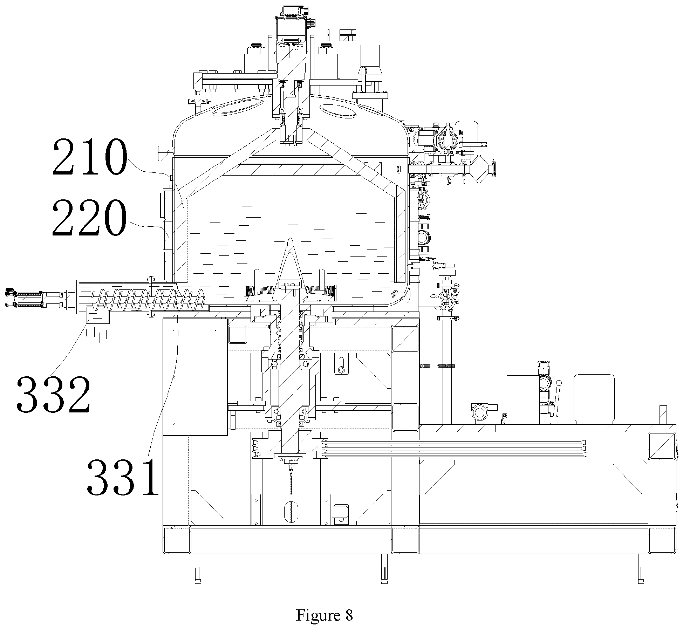

As shown in Figure 8, in one embodiment of the present application, the slurry container (200) also includes a wall stirring blade (210). The wall stirring blade (210) is attached to the inner wall of the slurry container (200).

The outer peripheral surface of the slurry container (200) is also provided with a cooling jacket (220).

This embodiment involves the slurry container (200). The wall stirring blade (210) can detach the slurry from the inner wall of the slurry container (200) to improve the utilization rate of the slurry. The cooling jacket cools the slurry to ensure it does not overheat.

The first end of the slurry discharge casing in Figures 7 and 8 is denoted as the first end (331) of the slurry discharge casing, and the second end is denoted as the second end (332) of the slurry discharge casing.

The technical features of the above-mentioned embodiments can be combined arbitrarily, and there is no limitation on the execution sequence of each method step. To make the description concise, not all possible combinations of the technical features in the above embodiments are described. However, as long as these combinations of technical features do not contradict each other, they should be considered within the scope of the present specification. The above-described embodiments only express several embodiments of the present application, which are described in detail, but should not be understood as limiting the scope of the present application. It should be pointed out that ordinary technicians in this field can make various modifications and improvements without departing from the conception of the present application, and these are all within the scope of protection of the present application. Therefore, the scope of protection of the present application should be determined by the appended claims.

## Claims

1. A stirring device, **characterized by** comprising a stirring disc, wherein the stirring disc comprises stirring paddles, conical columns, and stirring guards;
The stirring guard is annular, and the side wall of the stirring guard is also provided with multiple jet orifices. The shape of the jet orifices is parallelogram. The stirring guard is provided with a row of jet orifices, and the row of jet orifices is set near the middle of the side wall of the stirring guard. Among the row of jet orifices, all jet orifices are uniformly arranged around the central axis of the stirring guard, and all jet orifices are in the same plane. The angle between the edge of the jet orifice along the vertical direction and the edge of the jet orifice along the horizontal direction is a preset angle, and the preset angle is less than 90 degrees;
The stirring paddles comprise multiple blades, each blade is fixedly connected to the side wall of the stirring guard, and each blade is uniformly arranged around the center point of the stirring guard;
The bottom of the conical column is connected to the stirring paddles by threads, and the central axis of the conical column coincides with the central axis of the stirring guard. The angle between the generatrix of the conical column and the axis line is within the range of greater than or equal to 15 degrees and less than or equal to 40 degrees;
The stirring disc also includes multiple stirring rods, and each blade is fixedly connected to a stirring rod.

2. The stirring device according to claim 1, further comprising:
A slurry tank, the slurry tank has a containing cavity, and the stirring disc is disposed in the containing cavity of the slurry tank;
A screw pump, the screw pump is fixedly connected to the slurry tank, and the containing cavity of the slurry tank is communicated with the screw pump;
A bracket, comprising a body, a connecting shaft, and a drive device, the slurry tank is fixedly connected to the body, a preset portion of the connecting shaft is accommodated in the inner cavity of the slurry tank, and the preset portion of the connecting shaft is fixedly connected to the stirring disc, and the connecting shaft is hinged to the drive device.

3. The stirring device according to claim 2, wherein a preset distance is provided between the bottom edge of the stirring disc and the bottom surface of the slurry tank, and the preset distance is within the range of greater than or equal to 15 millimeters and less than or equal to 25 millimeters.

4. The stirring device according to claim 3, wherein the ratio of the diameter of the stirring guard to the diameter of the slurry tank is within the range of greater than or equal to 0.3 and less than or equal to 0.6.

5. The stirring device according to claim 4, wherein each blade has the same structure;
Each blade comprises a paddle blade back and a paddle blade edge;
The paddle blade back is fixedly connected to the paddle blade edge;
The paddle blade edge is set tangentially along the rotation direction of the stirring disc;
The paddle blade back is set tangentially away from the rotation direction of the stirring disc.

6. The stirring device according to claim 5, wherein the central axis of the stirring rod is perpendicular to the horizontal plane;
Each stirring rod is fixedly connected to a paddle blade back;
Each stirring rod is set near the top surface of the paddle blade back;
Each stirring rod is uniformly arranged around the central axis of the stirring guard;
The height of each stirring rod is greater than the height of the stirring guard.

7. The stirring device according to claim 6, wherein each blade is provided with an efficiency-enhancing plate, the efficiency-enhancing plate is set on the top surface of the paddle blade back;
Each efficiency-enhancing plate is set between the conical column and the stirring rod;
The structure of each efficiency-enhancing plate is the same;
The efficiency-enhancing plate is perpendicular to the paddle blade back;
The height of the efficiency-enhancing plate is less than the height of the stirring guard.

8. The stirring device according to claim 7, wherein the screw pump comprises a first thread section, a second thread section, and a discharge casing;
The discharge casing is fitted to the outside of the first thread section and the second thread section;
The structure of the first thread section and the second thread section is the same;
The first thread section comprises a motor and a screw;
The motor is fixedly connected to the discharge casing;
The power shaft of the motor is fixedly connected to the screw;
The central axis of the motor coincides with the central axis of the screw;
The screw of the first thread section meshes with the screw of the second thread section;
The first end of the discharge casing is connected to the slurry tank;
The second end of the discharge casing is externally connected to a finished product storage device.

9. The stirring device according to claim 8, wherein the slurry tank further comprises a wall stirring paddles;
The wall stirring paddles is attached to the inner wall of the slurry tank.
